# EUROPÄISCHE PATENTSCHRIFT

(11) **EP 3 442 849 B1**
(45) Veröffentlichungstag und Bekanntmachung des Hinweises auf die Patenterteilung: **01.01.2020**
(21) Anmeldenummer: 17712412.0
(22) Anmeldetag: 20.03.2017
(51) Int. Cl.: G01C 11/06, B61L 23/04, B61K 9/08, E01B 35/00

(54) **VERFAHREN UND MESSSYSTEM ZUM ERFASSEN EINES FESTPUNKTES NEBEN EINEM GLEIS**
METHOD AND MEASURING SYSTEM FOR SENSING A FIXED POINT NEXT TO A TRACK
PROCÉDÉ ET SYSTÈME DE MESURE POUR DÉTECTER UN POINT FIXE PRÈS D'UNE VOIE

(30) Priorität: 15.04.2016 AT 1992016
(43) Veröffentlichungstag der Anmeldung: 20.02.2019
(73) Patentinhaber: Plasser & Theurer Export von Bahnbaumaschinen GmbH, 1010 Wien (AT)
(72) Erfinder: BÜRGER, Martin, 4030 Linz (AT); ZAUNER, Gerald, 4073 Wilhering (AT)
(86) Internationale Anmeldenummer: PCT/EP2017/000351
(87) Internationale Veröffentlichungsnummer: WO 2017/178093

(56) Entgegenhaltungen:
- WO-A1-2014/039747
- DE-A1-102006 021 040
- PANTYUSHIN ANTON ET AL: "Control measurement system for railway track position", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 8486, 11. Oktober 2012 (2012-10-11), Seiten 84861B-84861B, XP060029552, DOI: 10.1117/12.930503 ISBN: 978-1-62841-730-2

## Beschreibung

### Gebiet der Technik

Die Erfindung betrifft ein Verfahren zur Ermittlung der Ist-Lage eines Gleises gegenüber einem in einer seitlichen Umgebung des Gleises positionierten Festpunkt mittels einer auf dem Gleis verfahrbaren Erfassungseinrichtung, auf der ein Stereokamerasystem angeordnet ist, wobei die Lage des Festpunktes zum Gleis durch Auswertung eines Bildpaares vermessen wird. Zudem betrifft die Erfindung ein Messsystem zur Durchführung des Verfahrens.

### Stand der Technik

Ein in Schotter gebettetes Gleis wird durch Befahren und durch Witterungseinflüsse in seiner örtlichen Lage beeinflusst. Zur Überprüfung einer aktuellen Gleislage und insbesondere vor Instandsetzungsarbeiten erfolgen deshalb regelmäßig Messungen mittels eines eigens dafür vorgesehenen Messwagens oder mittels einer Gleisbaumaschine.

Bekannte Messmethoden nutzen neben dem Gleis befindliche Festpunkte, die an fixen Einrichtungen wie Elektromasten angebracht sind. In der Regel ist ein Festpunkt als Spitze eines Vermarkungsbolzens festgelegt. Die Lage jedes Festpunktes zum Gleis wird in Verzeichnissen dokumentiert. Damit ist für das Gleis eine Soll-Lage bestimmt, insbesondere für Kreis- und Übergangsbögen sowie Neigungsbrüche. Oft werden zwischen Hauptpunkten auch Zwischenfestpunkte angeordnet.

Aus der EP 0 511 191 A2 ist eine Einrichtung zum Messen der Distanz zwischen einem Gleis und einem Fixpunkt bekannt. Dabei wird die Einrichtung in eine Position vor einem Fixpunkt verfahren und mittels eines Zielfernrohres wird ein distanzmessender Lasersensor auf den Fixpunkt ausgerichtet.

In der AT 514502 A1 ist ein Verfahren zur Ermittlung einer Gleis-Solllage mittels eines Festpunktes offenbart, wobei jeder Festpunkt mit einer Abtasthilfe verbunden ist und die Gleisumgebung permanent mit einem Rotationslaser abgetastet wird. Aus einer aufgenommenen Punktwolke der Abtasthilfe wird die Lage des zugeordneten Festpunktes in Bezug auf das Gleis berechnet.

Aus XP 060 029 552, PANTYUSHIN ANTON ET AL: "Control measurement system for railway track position", OPTOMECHATRONIC MICRO/NANO DEVICES AND COMPONENTS III : 8-10 OCTOBER 2007, LAUSANNE, SWITZERLAND; [PROCEEDINGS OF SPIE, ISSN 0277-786X], SPIE, BELLINGHAM, WASH, Bd. 8486, 11. October 2012 (2012-10-11), Seiten 84861B-84861B, DOI: 10.1117/12.930503 ISBN: 978-1-62841-730-2 und US 2014/0071269 A1 sind Verfahren und Messsysteme zur Gleisvermessung bekannt, bei dem mittels eines Stereokamerasystems ein Bildpaar eines Festpunktes aufgenommen wird. Mittels eines Prozessors wird das Bildpaar ausgewertet, um daraus die Lage des Festpunktes gegenüber einem Gleis zu ermitteln.

### Zusammenfassung der Erfindung

Der Erfindung liegt die Aufgabe zugrunde, aus dem Stand der Technik bekannte Verfahren weiterzubilden. Zudem ist ein entsprechend verbessertes Messsystem anzugeben.

Erfindungsgemäß wird diese Aufgabe gelöst durch ein Verfahren gemäß Anspruch 1 und ein Messsystem gemäß Anspruch 11. Abhängige Ansprüche geben vorteilhafte Ausgestaltungen der Erfindung an.

Dabei wird die Erfassungseinrichtung entlang des Gleises bewegt, wobei mittels des Stereokamerasystems laufend Bildpaare der seitlichen Umgebung des Gleises aufgenommen werden, wobei in einem Suchvorgang mittels eines in einer Auswerteeinrichtung automatisiert durchgeführten Mustererkennungsprozesses in den Bildpaaren der Festpunkt gesucht wird und wobei in einem nächsten Verfahrensschritt bei erkanntem Festpunkt durch Auswertung zumindest eines Bildpaars die Lage des Festpunkts gegenüber dem Gleis mittels Photogrammetrie ermittelt wird.

Auf diese Weise ist die Möglichkeit geschaffen, im Vorbeifahren Festpunkte zu vermessen, wobei die Gestaltung des Festpunktes an keine spezielle Form gebunden ist. Auch ein zweidimensional gekennzeichneter Festpunkt ist mit diesem Verfahren erkennbar. Zudem ist durch den weiten Erfassungsbereich des Stereokamerasystems die Festpunkterkennung auch bei hohen Geschwindigkeiten sichergestellt, weil die seitliche Umgebung durchgängig abgebildet wird.

In einer Weiterbildung des Verfahrens ist vorgesehen, dass mittels einer Inertialmesseinheit laufend die Position der Erfassungseinrichtung gegenüber einem ortsfesten Bezugssystem erfasst wird und dass sich eine dabei ergebende Drift mittels der ermittelten Lage des Festpunktes korrigiert wird. Ein derart laufend sich selbst kalibrierendes Messverfahren ist für ein automatisiertes Vermessen des Gleises mit hoher Genauigkeit geeignet.

Zudem ist es vorteilhaft, wenn eine Überhöhungslage der Erfassungseinrichtung gemessen und in die Lageermittlung des Festpunktes einbezogen wird. Eine in Kurven übliche Gleisüberhöhung wird damit in einfacher Weise berücksichtigt und hat keinen Einfluss auf das Ergebnis der Lagebestimmung des Festpunktes.

Eine weitere vorteilhafte Ausgestaltung sieht vor, dass eine neben dem Festpunkt angebrachte Kennung aufgenommen und ausgewertet wird. Auf diese Weise ist der erkannte Festpunkt sofort anhand der Kennung einem Verzeichniseintrag zuordenbar und kann mit abgespeicherten Daten verknüpft werden.

Um die Genauigkeit des Verfahrens weiter zu steigern ist es sinnvoll, wenn während einer Vorbeifahrt von mehreren Aufnahmepositionen aus Bildpaare des Festpunktes aufgenommen werden und wenn in mehreren Bildpaaren die Lage des Festpunktes gegenüber dem Gleis ausgewertet wird. Für die weitere Datenverarbeitung stehen somit mehrere Lagedaten des Festpunktes zur Verfügung.

Dabei wird günstigerweise ein gemeinsames Koordinatensystem vorgegeben, in dem die Koordinaten mehrerer Aufnahmepositionen bestimmt werden, wobei die in der jeweiligen Aufnahmeposition ermittelten Lagekoordinaten des Festpunktes in das gemeinsame Koordinatensystem transformiert werden. Die dann vorliegenden redundanten Lagedaten des Festpunktes werden zu einem Ergebnis zusammengeführt.

Das erfolgt in einfacher Weise dadurch, dass zur Lageangabe des Festpunktes für jede Achse des gemeinsamen Koordinatensystems aus mehreren transformierten Koordinatenwerten ein gemittelter Koordinatenwert errechnet wird. Durch eine gewichtete Mittelwertbildung können fehlerbehaftete Auswertungen ausgeblendet werden.

Eine weitere Verbesserung des Verfahrens sieht vor, dass die Erfassungseinrichtung auf den Schienen des Gleises mittels Spurkranzrollen verfahren wird und dass dabei die Spurkranzrollen seitlich an die Schienen gepresst werden. Damit ist sichergestellt, dass die Lage der Erfassungseinrichtung gegenüber den Schienen eindeutig definiert ist. Für die Auswertung der Lage des Festpunktes wird ein Bezugssystem vorgegeben, dessen Ursprung in einem Spurkranzauflagepunkt der angepressten Erfassungseinrichtung liegt.

In einer anderen Ausführungsform wird mittels einer Messvorrichtung laufend die Lage der Erfassungseinrichtung gegenüber einer Schiene gemessen. Somit ist die Erfassungseinrichtung auf einem Schienenfahrwerk eines Messwagens oder einer Gleisbaumaschine anordenbar, dessen Lage gegenüber der Schiene nicht eindeutig bestimmt ist. Als Bezugssystem für die Lagebestimmung des Festpunktes dient auch in diesem Fall ein Koordinatensystem mit einem eindeutig definierten Spurkranzauflagepunkt als Ursprung. Dabei wird die von der Erfassungseinrichtung ermittelte Lage des Festpunktes gegenüber dem Gleis mit den erfassten Messwerten der Messvorrichtung korrigiert.

Für eine hohe Qualität der Bilddaten ist es von Vorteil, wenn die seitliche Umgebung des Gleises mittels eines Infrarotscheinwerfers ausgeleuchtet wird und wenn die Bildpaare mittels eines Infrarotfilters aufgenommen werden.

Ein erfindungsgemäßes Messsystem zur Durchführung eines der genannten Verfahren umfasste einen in einer seitlichen Umgebung des Gleises positionierten Festpunkt und eine auf dem Gleis verfahrbare Erfassungseinrichtung zur Vermessung der Lage des Festpunktes zum Gleis. Dabei ist auf der Erfassungseinrichtung ein Stereokamerasystem zur Aufnahme von Bildpaaren der seitlichen Umgebung des Gleises angeordnet, wobei das Stereokamerasystem mit einer Auswerteeinrichtung verbunden ist, die anhand zumindest eines Bildpaares die Lage des Festpunktes gegenüber dem Gleis ermittelt. Dabei sind der Auswerteeinrichtung laufend Bildpaare zugeführt, wobei in der Auswerteeinrichtung eine Mustererkennung zur Suche des Festpunktes in den Bildpaaren eingerichtet ist.

Eine Weiterbildung des Messsystems sieht vor, dass auf der Erfassungseinrichtung eine Inertialmesseinheit angeordnet ist. Diese dient zur laufenden Lageermittlung der Erfassungseinrichtung gegenüber einem ortsfesten Bezugssystem und kann auch zum Messen einer Überhöhung herangezogen werden.

Zudem ist vorteilhafterweise vorgesehen, dass die Erfassungseinrichtung als Komponente einer Bahnbaumaschine oder eines Messwagens ausgebildet ist. Die Erfassungseinrichtung ist beispielsweise über eine angetriebene Aufhängung an einem Maschinenrahmen befestigt und bei Bedarf auf das Gleis absenkbar. Ansonsten bleibt die Erfassungseinrichtung in einer angehobenen Position, sodass die Spurkranzrollen keinem Verschleiß unterliegen. Alternativ dazu ist die Erfassungseinrichtung mit einer Messvorrichtung zum laufenden Messen des Abstandes zur Schiene direkt an einem Schienenfahrwerk der Bahnbaumaschine oder des Messwagens angebracht. Auf diese Weise sind höhere Arbeitsgeschwindigkeiten realisierbar.

Dabei ist es sinnvoll, wenn die Bahnbaumaschine oder der Messwagen einen Wegaufnehmer zur Messung einer auf dem Gleis zurückgelegten Distanz umfasst. Als Wegaufnehmer ist entweder ein eigenes Messrad vorgesehen oder ein Rad eines Fahrwerks der Bahnbaumaschine bzw. des Messwagens ist mit einem Drehgeber ausgestattet.

Um auch unter schwierigen Bedingungen eine zuverlässige Erkennung des Festpunktes sicherzustellen ist es von Vorteil, wenn der Festpunkt redundante Elemente aufweist.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Messwagen mit Erfassungseinrichtung in Seitenansicht
- Fig. 2: Schnittansicht des Messwagens mit Erfassungseinrichtung
- Fig. 3: Festpunkt mit redundanten Element
- Fig. 4: Erfassungseinrichtung in drei Aufnahmepositionen

### Beschreibung der Ausführungsformen

Der Messwagen 1 umfasst einen auf einem Maschinenrahmen 2 aufgebauten Wagenkasten 3, der auf zwei Fahrwerken 4 abgestützt ist. Mittels dieser Fahrwerke 4 ist der Messwagen 1 auf einem Gleis 5 verfahrbar. Das Gleis 5 besteht aus zwei auf Schwellen 6 befestigten Schienen 7 und ist in einem Schotterbett 8 gelagert.

Am Maschinenrahmen 2 ist mittels einer beweglichen Aufhängung 9 eine Erfassungseinrichtung 10 befestigt. Für einen Messvorgang ist die Erfassungseinrichtung 10, wie dargestellt, auf das Gleis 5 abgesenkt. Bei Überstellfahrten wird sie hochgezogen und verriegelt.

In Fahrtrichtung 11 gesehen ist vorne am Messwagen 1 ein als Messrad ausgebildeter Wegaufnehmer 12 angebracht, um eine zurückgelegte Wegstrecke zu erfassen. Alternativ dazu kann auch ein Rad eines Fahrwerks 4 mit einem Wegaufnehmer 12 (Distance Measurement Indicator DMI) ausgestattet werden. Der Wegaufnehmer 12 gibt Impulse aus, die Bruchteile der Radumdrehungen darstellen.

In der dargestellten Ausführungsform umfasst die Erfassungseinrichtung 10 Spurkranzrollen 13, die mittels einer Anpressvorrichtung 14 seitlich an die Schienen 7 gepresst werden. Dabei wird für die Auswertung der Lage eines Festpunktes 15 als Bezugssystem ein Koordinatensystem mit drei Achsen x, y, z vorgegeben, dessen Ursprung 16 im Spurkranzauflagepunkt der linken vorderen Spurkranzrolle 13 (in Fahrtrichtung 11 gesehen) liegt. Durch das seitliche anpressen der Spurkranzrolle 13 gegen die Schiene 7 ist dieser Punkt 16 immer genau definiert.

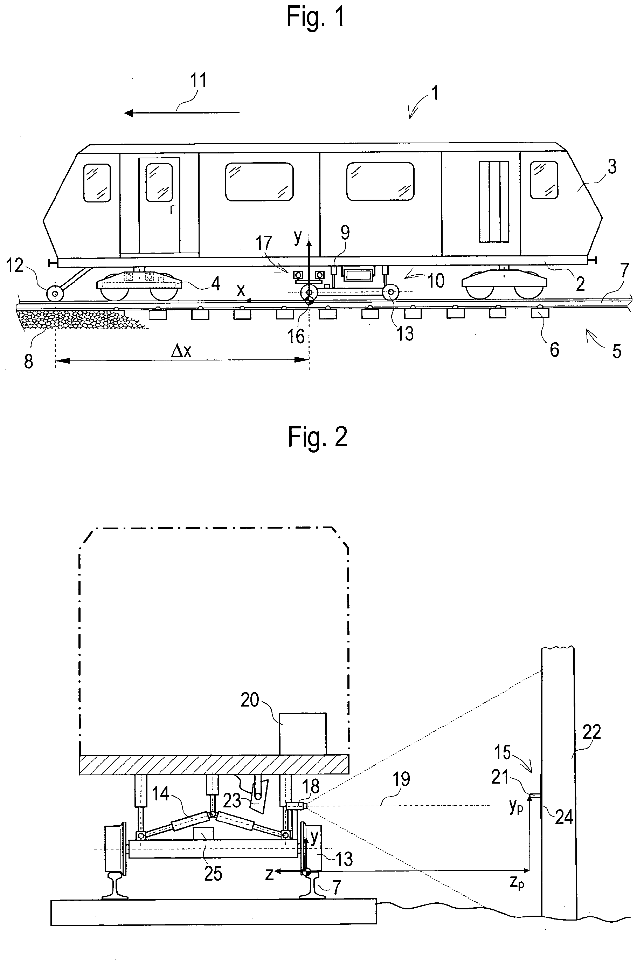

In einer anderen Ausführungsform ist die Erfassungseinrichtung 10 auf einem Fahrwerk 4 montiert (in Fig. 1 gestrichelt am vorderen Fahrwerk 4 dargestellt) und pendelt sinusförmig gegenüber der Schiene 7 quer zur Fahrtrichtung 11. Als Ursprung 16 eines Bezugssystems dient hier ein definierter Spurkranzauflagepunkt. Üblicherweise wird dieser als Schnittpunkt der inneren Schienenkontur mit einer 14mm unter der Schienenoberkante verlaufenden waagrechten Geraden angenommen. Mit einer solchen Anordnung sind gegenüber einer Ausführung mit angepressten Spurkranzrollen höhere Arbeitsgeschwindigkeiten realisierbar.

An der Erfassungseinrichtung 10 bzw. am Fahrwerk 4 ist eine Messvorrichtung angeordnet, welche laufend die Bewegung der Erfassungseinrichtung 10 gegenüber einer Schiene 7 misst. Dabei handelt es sich beispielsweise um ein optisches Spurweitenmesssystem (Optical Gauge Measurement System, OGMS). Eine gemessene Relativverschiebung der Erfassungseinrichtung 10 gegenüber dem definierten Schienenauflagepunkt wird in die Lageberechnung des erfassten Festpunktes 15 einbezogen.

Günstigerweise wird auch die zu dokumentierende zurückgelegte Wegstrecke auf das Koordinatensystem mit dem Spurkranzauflagepunkt als Ursprung 16 bezogen. Ein vom Wegaufnehmer 12 gemessener Wert reduziert sich dabei um eine konstante Distanz Δx zwischen Wegaufnehmer 12 und dem Koordinatenursprung 16.

Als bildaufnehmende Komponente der Erfassungseinrichtung 10 ist ein Stereokamerasystem 17 angeordnet. Dieses umfasst zwei zueinander exakt ausgerichtete Kameras 18, wobei eine Symmetrieachse des Stereokamerasystems 17 günstigerweise durch den Koordinatenursprung 16 verläuft. Konkret sind die optischen Achsen 19 der beiden Kameras 18 zueinander parallel in Richtung der seitlichen Umgebung des Gleises 5 ausgerichtet.

Das erfindungsgemäße Verfahren nutzt das Stereokamerasystem 17, um von der seitlichen Umgebung während einer Vorbeifahrt laufend Bildpaare aufzunehmen. Zur Auswertung der Bildpaare ist das Stereokamerasystem 17 mit einer Auswerteeinrichtung 20 verbunden. Dabei handelt es sich beispielsweise um einen Industriecomputer, der eigens zu diesem Zweck eingerichtet ist.

In der Auswerteeinrichtung 20 läuft ein automatisierter Mustererkennungsprozess ab, um in den aufgenommenen Bildpaaren einen Festpunkt 15 zu erkennen. Für ein solches Matching sind Algorithmen bekannt, die in Echtzeit verlässliche Ergebnisse liefern. Der Festpunkt 15 ist üblicherweise als Vermarkungsbolzen 21 an einer fixen Einrichtung 22 neben dem Gleis 5 positioniert, beispielsweise an einem Strommast.

Zur Vermeidung von Störeinflüssen durch Sonnenlicht oder Beleuchtungskörper ist es sinnvoll, wenn die zu erfassende seitliche Umgebung des Gleises 4 mittels eines Infrarotscheinwerfers 23 ausgeleuchtet wird. Die Kameras 18 sind dann mit Infrarotfiltern versehen, um das Licht aus anderen Quellen zu filtern.

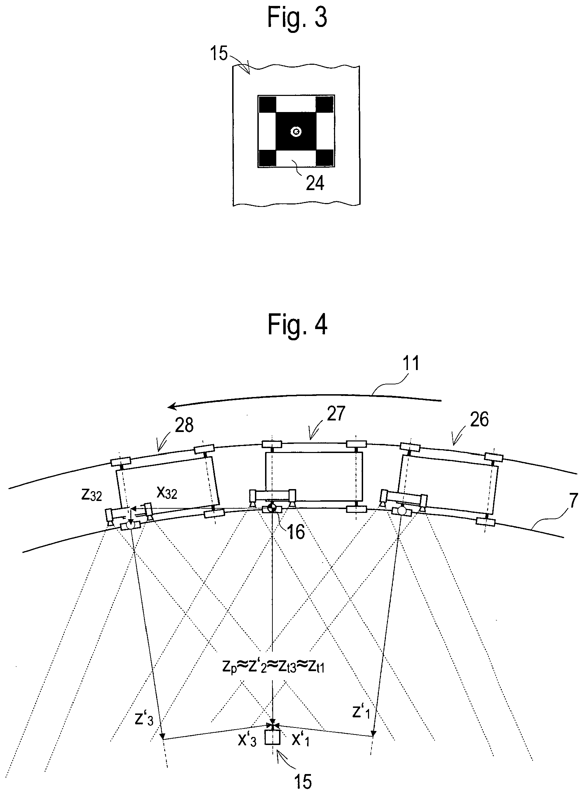

Für eine verlässliche Erkennung des Festpunktes 15 ist es zudem hilfreich, wenn dieser mit redundanten Elementen ausgestattet ist, wie in Fig. 3 dargestellt. In der Mitte der geometrischen Figur befindet sich der Vermarkungsbolzen 21 in einer Vorderansicht. Die Lage des Festpunkts 15 ist dabei durch den Mittelpunkt der sichtbaren Stirnseite des Vermarkungsbolzens 21 festgelegt. Redundante Elemente sind auf einer Tafel 24 an der Basis des Vermarkungsbolzens 21 vorgesehen. Im vorliegenden Beispiel bilden die Eckpunkte der Quadrate redundante Referenzpunkte für die Lage des Festpunktes 15. Auch wenn Verschmutzungen oder Pflanzen Teile der Tafel 24 abdecken, bleiben in der Regel genügend Referenzpunkte für eine Auswertung erhalten.

Sobald der Festpunkt 15 in einem Bildpaar erkannt wurde, erfolgt in einem nächsten Verfahrensschritt die Auswertung von Lageinformationen des Festpunktes 15 mittels Photogrammetrie. Dabei kommt es zu einer Zweibildauswertung anhand der Paralaxen und eines bekannten Basisabstands zwischen den Kameras 18. Auch hierzu sind Algorithmen bekannt, die eine Auswertung in Echtzeit ermöglichen.

Gewöhnlich erfolgt zunächst eine Ermittlung von Koordinaten in einem Kamera-internen Bezugssystem und anschließend eine Transformation auf das vorgegebene Koordinatensystem. In Fig. 2 sind als Ergebnis die y-Koordinate yₚ und die z-Koordinate zₚ des Festpunktes 15 dargestellt. Falls das Gleis 5 eine Überhöhung aufweist, ist diese bei der Berechnung der Koordinaten yₚ, zₚ zu berücksichtigen. Festgestellt wird die Überhöhung vorteilhafterweise mittels einer Inertialmesseinheit 25 (IMU), die an der Erfassungseinrichtung 10 angebracht ist.

Um die Genauigkeit dieses Auswertungsschritts zu erhöhen ist eine hohe Auflösung der Kameras 18 sinnvoll. Zudem sollten kurze Verschlusszeiten gewählt werden, wobei diese Vorgabe von der Fahrgeschwindigkeit der Erfassungseinrichtung 10 abhängt. Diese beeinflusst auch die Bildrate der Kameras 18. Bei einer Geschwindigkeit von 80 km/h haben Versuche mit Bildraten von 140 Bildpaaren pro Sekunde sehr gute Ergebnisse geliefert.

Wie in Fig. 4 dargestellt werden während einer Vorbeifahrt mehrere Bildpaare des Festpunktes 15 aufgenommen und ausgewertet. Damit sind für den Festpunkt 15 mehrere Lageinformationsdaten aus verschiedenen Aufnahmepositionen 26, 27, 28 bekannt. Eine Steigerung der Ergebnisgenauigkeit liefert eine Zusammenführung dieser Lageinformationsdaten durch Transformation auf ein gemeinsames Koordinatensystem.

Eine solche Transformation der z-Koordinate des Festpunktes 15 wird anhand der in Fig. 4 dargestellten Koordinaten x'₁, z'₁, z'₂, x₃₂, z₃₂, z'₃, x'₃ erläutert. Dabei ist beispielsweise der Spurkranzauflagepunkt der linken vorderen Spurkranzrolle 13 zum Zeitpunkt der dargestellten mittleren Aufnahmeposition 27 als Ursprung 16 des gemeinsamen Koordinatensystems festgelegt. Die x-Koordinate des Festpunktes 15 ist hier gleich Null.

Um die z-Koordinate z'₃ des Festpunktes 15 in Bezug auf die nächsten Aufnahmeposition 28 auf das gemeinsame Koordinatensystem zu transformieren, ist zunächst die Lage der Aufnahmeposition 28 in Bezug auf dieses Koordinatensystem festzustellen. Dies geschieht beispielsweise mittels der Inertialmesseinheit 25 und ergibt eine entsprechende x-Koordinate x₃₂ und eine z-Koordinate z₃₂. Weist das Gleis 5 eine Steigung oder Überhöhungsrampe auf, ergibt sich auch ein entsprechender y-Wert.

Fasst man die Koordinaten als Vektoren auf, dann ergibt sich als transformierte z-Koordinate zₜ₃ des Festpunktes 15 folgender Zusammenhang: z̅ₜ̅₃̅ = x̅₃̅₂̅ + z̅₃̅₂̅ + z̅'̅₃̅ + x̅'̅₃̅.

In der Auswerteeinrichtung 20 ist ein entsprechender Algorithmus zur Koordinatentransformation eingerichtet. Auch für die z-Koordinate z'₁ des Festpunktes 15 bezogen auf die vorherige Aufnahmeposition 26 ergibt sich eine transformierte z-Koordinate zₜ₁.

Durch eine Mittelwertbildung aller transformierten z-Koordinaten zₜ₁, zₜ₃ und der im gemeinsamen Koordinatensystem erfassten z-Koordinate z'₂ ergibt sich eine genaue z-Koordinate zₚ des Festpunktes 15. Einzelne Fehlaufnahmen, die z.B. auf einen Pixelsprung, Schmutzpartikel oder mangelnde Beleuchtung zurückzuführen sind, werden auf diese Weise ausgeglichen. In der Praxis werden mit einer hohen Bildrate weit mehr als 3 Bildpaare des Festpunktes 15 aufgenommen, wodurch für die Mittelwertbildung ausreichend viele Lagedaten vorliegen.

In einem optionalen weiteren Verfahrensschritt wird die erfasste Lage des Festpunktes 15 genutzt, um die mittels der Inertialmesseinheit 25 und des Wegaufnehmers 12 laufend ermittelte Lage des Messwagens 1 abzugleichen. Konkret wird am Beginn einer Messfahrt die Lage des Messwagens 1 gegenüber einem ortsfesten Bezugssystem festgelegt. Die Inertialmesseinheit 25 und der Wegaufnehmer 12 erfassen von dieser Ursprungslage ausgehend die relativen Lageänderungen des Messwagens 1, wobei erfahrungsgemäß eine Drift auftritt.

Da ein Festpunkt 15 ebenfalls einen ortsfesten Bezugspunkt darstellt, wird durch die automatisierte Vermessung des Festpunktes 15 während der Messfahrt diese Drift ermittelt und eliminiert. Üblicherweise sind entlang einer Messstrecke mehrere Festpunkte 15 angebracht, sodass infolge eines wiederkehrenden Abgleichs über die gesamte Messstrecke genaue Lagedaten des Messwagens 1 vorliegen.

Dasselbe Verfahren ist für Gleisbaumaschinen wie z.B. Stopfmaschinen vorgesehen. Hier erfolgt eine Vermessung der Ist-Lage des Gleises 5, bevor es durch Heben, Richten und Unterstopfen in seine Soll-Lage gebracht wird.

## Patentansprüche

1. Verfahren zur Ermittlung der Ist-Lage eines Gleises (5) gegenüber einem in einer seitlichen Umgebung des Gleises (5) positionierten Festpunkt (15) mittels einer auf dem Gleis (5) verfahrbaren Erfassungseinrichtung (10), auf der ein Stereokamerasystem (19) angeordnet ist, wobei die Lage des Festpunktes (15) zum Gleis (5) durch Auswertung eines Bildpaares vermessen wird, wobei die Erfassungseinrichtung (10) entlang des Gleises (5) bewegt wird, dabei mittels des Stereokamerasystems (17) laufend Bildpaare der seitlichen Umgebung des Gleises (5) aufgenommen werden, in einem Suchvorgang mittels eines in einer Auswerteeinrichtung (20) automatisiert durchgeführten Mustererkennungsprozesses in den laufend aufgenommenen Bildpaaren der Festpunkt (15) gesucht wird und in einem nächsten Verfahrensschritt bei erkanntem Festpunkt (15) die Lage des Festpunkts (15) gegenüber dem Gleis (5) mittels Photogrammetrie ermittelt wird.

2. Verfahren nach Anspruch 1, **dadurch gekennzeichnet, dass** mittels einer Inertialmesseinheit (25) laufend die Position der Erfassungseinrichtung (10) gegenüber einem ortsfesten Bezugssystem erfasst wird und dass sich eine dabei ergebende Drift mittels der ermittelten Lage des Festpunktes (15) korrigiert wird.

3. Verfahren nach Anspruch 1 oder 2, **dadurch gekennzeichnet, dass** eine Überhöhungslage der Erfassungseinrichtung (10) gemessen und in die Lageermittlung des Festpunktes (15) einbezogen wird.

4. Verfahren nach einem der Ansprüche 1 bis 3, **dadurch gekennzeichnet, dass** eine neben dem Festpunkt (15) angebrachte Kennung aufgenommen und ausgewertet wird.

5. Verfahren nach einem der Ansprüche 1 bis 4, **dadurch gekennzeichnet, dass** während einer Vorbeifahrt von mehreren Aufnahmepositionen (26, 27, 28) aus Bildpaare des Festpunktes (15) aufgenommen werden und dass in mehreren Bildpaaren die Lage des Festpunktes (15) gegenüber dem Gleis (5) ausgewertet wird.

6. Verfahren nach Anspruch 5, **dadurch gekennzeichnet, dass** ein gemeinsames Koordinatensystem vorgegeben wird, in dem die Koordinaten (x₃₂, z₃₂) mehrerer Aufnahmepositionen (26, 27, 28) bestimmt werden und dass die in der jeweiligen Aufnahmeposition (26, 27, 28) ermittelten Lagekoordinaten (x'₁, z'₁, z'₂, x'₃, z'₃) des Festpunktes (15) in das gemeinsame Koordinatensystem transformiert werden.

7. Verfahren nach Anspruch 6, **dadurch gekennzeichnet, dass** zur Lageangabe des Festpunktes (15) für jede Achse (x, y, z) des gemeinsamen Koordinatensystems aus mehreren transformierten Koordinatenwerten (x'₁, z'₁, z'₂, x'₃, z'₃) ein gemittelter Koordinatenwert (zₚ, yₚ) errechnet wird.

8. Verfahren nach einem der Ansprüche 1 bis 7, **dadurch gekennzeichnet, dass** die Erfassungseinrichtung (10) auf den Schienen (7) des Gleises (5) mittels Spurkranzrollen (13) verfahren wird und dass dabei die Spurkranzrollen (13) seitlich an die Schienen (7) gepresst werden.

9. Verfahren nach einem der Ansprüche 1 bis 7, **dadurch gekennzeichnet, dass** mittels einer Messvorrichtung laufend die Lage der Erfassungseinrichtung (10) gegenüber einer Schiene (7) gemessen wird.

10. Verfahren nach einem der Ansprüche 1 bis 9, **dadurch gekennzeichnet, dass** die seitliche Umgebung des Gleises (5) mittels eines Infrarotscheinwerfers (23) ausgeleuchtet wird und dass die Bildpaare mittels eines Infrarotfilters aufgenommen werden.

11. Messsystem zur Durchführung eines Verfahrens nach einem der Ansprüche 1 bis 10, umfassend einen in einer seitlichen Umgebung des Gleises (5) positionierten Festpunkt (15) und eine auf dem Gleis (5) verfahrbare Erfassungseinrichtung (10), auf der zur Vermessung der Lage des Festpunktes (15) zum Gleis (5) ein Stereokamerasystem (17) zur Aufnahme von Bildpaaren der seitlichen Umgebung des Gleises (5) angeordnet ist, wobei das Stereokamerasystem (17) mit einer Auswerteeinrichtung (20) verbunden ist, die anhand eines Bildpaares die Lage des Festpunktes (15) gegenüber dem Gleis (5) ermittelt, wobei der Auswerteeinrichtung (20) laufend Bildpaare zugeführt sind und in der Auswerteeinrichtung (20) eine Mustererkennung zur Suche des Festpunktes (15) in den Bildpaaren eingerichtet ist.

12. Messsystem nach Anspruch 11, **dadurch gekennzeichnet, dass** auf der Erfassungseinrichtung (10) eine Inertialmesseinheit (25) angeordnet ist.

13. Messsystem nach Anspruch 11 oder 12, **dadurch gekennzeichnet, dass** die Erfassungseinrichtung (10) als Komponente einer Bahnbaumaschine oder eines Messwagens (1) ausgebildet ist.

14. Messsystem nach Anspruch 13, **dadurch gekennzeichnet, dass** die Bahnbaumaschine oder der Messwagen (1) einen Wegaufnehmer (12) zur Messung einer auf dem Gleis (5) zurückgelegten Distanz umfasst.

15. Messsystem nach einem der Ansprüche 11 bis 14, **dadurch gekennzeichnet, dass** der Festpunkt (15) redundante Elemente aufweist.

## Claims

1. A method for determining the actual position of a track (5) relative to a fixed point (15), located in a lateral vicinity of the track (5), by means of a registering device (10), mobile on the track (5), on which a stereo camera system (19) is arranged, wherein the position of the fixed point (15) relative to the track (5) is surveyed by evaluation of an image pair, wherein the registering device (10) is moved along the track (5), during which image pairs of the lateral vicinity of the track (5) are continuously recorded by means of the stereo camera system (17), in a search procedure the fixed point (15) is searched in the continuously recorded image pairs by means of a pattern recognition process carried out in an automatized way in an evaluation device (20), and that in a next method step - upon identification of a fixed point (15) - the position of the fixed point (15) relative to the track (5) is determined by means of photogrammetry.

2. A method according to claim 1, **characterized in that,** by means of an inertial measuring unit (25), the position of the registering device (10) relative to a stationary reference system is registered continuously, and that a drift resulting in the process is corrected by means of the determined position of the fixed point (15).

3. A method according to claim 1 or 2, **characterized in that** a super-elevation position of the registering device (10) is measured and included in determining the position of the fixed point (15).

4. A method according to one of claims 1 to 3, **characterized in that** an identification affixed next to the fixed point (15) is recorded and evaluated.

5. A method according to one of claims 1 to 4, **characterized in that,** while passing by, image pairs of the fixed point (15) are recorded from several recording positions (26, 27, 28), and that the position of the fixed point (15) relative to the track (5) is evaluated in several image pairs.

6. A method according to claim 5, **characterized in that** a common coordinate system is specified in which the coordinates (x₃₂, z₃₂) of several recording positions (26, 27, 28) are established, and that the position coordinates (x'₁, z'₁, z'₂, x'₃, z'₃) of the fixed point (15) determined in the respective recording position (26, 27, 28) are transformed into the common coordinate system.

7. A method according to claim 6, **characterized in that,** for indicating the position of the fixed point (15), an averaged coordinate value (zₚ, yₚ) for each axis (x, y, z) of the common coordinate system is calculated from several transformed coordinate values (x'₁, z'₁, z'₂, x'₃, z'₃).

8. A method according to one of claims 1 to 7, **characterized in that** the registering device (10) is moved on the rails (7) of the track (5) by means of flanged rollers (13), and that during this the flanged rollers (13) are pressed laterally against the rails (7).

9. A method according to one of claims 1 to 7, **characterized in that** the position of the registering device (10) relative to a rail (7) is measured continuously by means of a measuring device.

10. A method according to one of claims 1 to 9, **characterized in that** the lateral vicinity of the track (5) is illuminated by means of an infrared spotlight (23), and that the image pairs are recorded by means of an infrared filter.

11. A measuring system for carrying out a method according to one of claims 1 to 10, comprising a fixed point (15) positioned in a lateral vicinity of the track (5) and a registering device (10), mobile on the track (5), on which - for surveying the position of the fixed point (15) relative to the track (5) - a stereo camera system (17) for recording image pairs of the lateral vicinity of the track (5) is arranged, wherein the stereo camera system (17) is connected to an evaluation device (20) which determines by way of an image pair the position of the fixed point (15) relative to the track (5), wherein image pairs are continuously fed to the evaluation device (20) and a pattern recognition is set up in the evaluation device (20) to search the fixed point (15) in the image pairs.

12. A measuring system according to claim 11, **characterized in that** an inertial measuring unit (25) is arranged on the registering device (10).

13. A measuring system according to claim 11 or 12, **characterized in that** the registering device (10) is designed as a component of a track maintenance machine or a measuring car (1).

14. A measuring system according to claim 13, **characterized in that** the track maintenance machine or the measuring car (1) comprises a displacement transducer (12) for measuring a distance travelled on the track (5).

15. A measuring system according to one of claims 11 to 14, **characterized in that** the fixed point includes (15) redundant elements.

## Revendications

1. Procédé de détermination de la position réelle d'une voie ferrée (5) par rapport à un point fixe (15) positionné dans un environnement latéral de la voie ferrée (5) au moyen d'un dispositif de détection (10) pouvant être déplacé sur la voie ferrée (5) sur lequel un système de caméra stéréo (19) est disposé, dans lequel la position du point fixe (15) par rapport à la voie ferrée (5) est mesurée par évaluation d'une paire d'images, dans lequel le dispositif de détection (10) est déplacé le long de la voie ferrée (5), des paires d'images de l'environnement latéral de la voie ferrée (5) sont enregistrées ce faisant en continu au moyen du système de caméra stéréo (17), le point fixe (15) est recherché dans un processus de recherche au moyen d'un processus de reconnaissance de modèle réalisé de manière automatisée dans un dispositif d'évaluation (20) dans les paires d'images enregistrées en continu et la position du point fixe (15) par rapport à la voie ferrée (5) est déterminée au moyen d'une photogrammétrie dans une étape de procédé suivante dans le cas du point fixe dépisté (15).

2. Procédé selon la revendication 1, **caractérisé en ce que** la position du dispositif de détection (10) par rapport à un système de référence fixe est détectée en continu au moyen d'un module de mesure d'inertie (25) et qu'une dérive qui en résulte ce faisant est corrigée au moyen de la position déterminée du point fixe (15).

3. Procédé selon la revendication 1 ou 2, **caractérisé en ce qu'**une position surélevée du dispositif de détection (10) est mesurée et incorporée dans la détermination de position du point fixe (15).

4. Procédé selon une des revendications 1 à 3, **caractérisé en ce qu'**une signalisation placée près du point fixe (15) est enregistrée et évaluée.

5. Procédé selon une des revendications 1 à 4, **caractérisé en ce que** des paires d'images du point fixe (15) sont enregistrées pendant un passage depuis plusieurs positions d'enregistrement (26, 27, 28) et que la position du point fixe (15) par rapport à la voie ferrée (5) est évaluée dans plusieurs paires d'images.

6. Procédé selon la revendication 5, **caractérisé en ce qu'**un système de coordonnées commun est prédéfini, dans lequel les coordonnées (x₃₂, z₃₂) de plusieurs positions d'enregistrement (26, 27, 28) sont déterminées et que les coordonnées de position (x'₁, z'₁, z'₂, x'₃, z'₃) du point fixe (15) déterminées dans la position d'enregistrement respective (26, 27, 28) sont transformées dans le système de coordonnées commun.

7. Procédé selon la revendication 6, **caractérisé en ce qu'**une valeur de coordonnée moyennée (zₚ, yₚ) est calculée à partir de plusieurs valeurs de coordonnée transformées (x'₁, z'₁, z'₂, x'₃, z'₃) pour l'indication de position du point fixe (15) pour chaque axe (x, y z) du système de coordonnées commun.

8. Procédé selon une des revendications 1 à 7, **caractérisé en ce que** le dispositif de détection (10) est déplacé sur les rails (7) de la voie ferrée (5) au moyen de rouleaux de boudin (13) et que les rouleaux de boudin (13) sont pressés ce faisant latéralement sur les rails (7).

9. Procédé selon une des revendications 1 à 7, **caractérisé en ce que** la position du dispositif de détection (10) par rapport à un rail (7) est mesurée en continu au moyen d'un dispositif de mesure.

10. Procédé selon une des revendications 1 à 9, **caractérisé en ce que** l'environnement latéral de la voie ferrée (5) est éclairé au moyen d'un phare infrarouge (23) et que les paires d'images sont enregistrées au moyen d'un filtre infrarouge.

11. Système de mesure pour la réalisation d'un procédé selon une des revendications 1 à 10, comprenant un point fixe (15) positionné dans un environnement latéral de la voie ferrée (5) et un dispositif de détection (10) pouvant être déplacé sur la voie ferrée (5) sur lequel un système de caméra stéréo (17) pour l'enregistrement de paires d'images de l'environnement latéral de la voie ferrée (5) est disposé pour la mesure de la position du point fixe (15) par rapport à la voie ferrée (5), dans lequel le système de caméra stéréo (17) est connecté à un dispositif d'évaluation (20) qui détermine à l'aide d'une paire d'images la position du point fixe (15) par rapport à la voie ferrée (5), dans lequel des paires d'images sont amenées au dispositif d'évaluation (20) en continu et une reconnaissance de modèle est incorporée dans le dispositif d'évaluation (20) pour la recherche du point fixe (15) dans les paires d'images.

12. Système de mesure selon la revendication 11, **caractérisé en ce qu'**un module de mesure d'inertie (25) est disposé sur le dispositif de détection (10).

13. Système de mesure selon la revendication 11 ou 12, **caractérisé en ce que** le dispositif de détection (10) est réalisé en tant que composant d'une machine de construction ferroviaire ou d'un wagon de mesure (1).

14. Système de mesure selon la revendication 13, **caractérisé en ce que** la machine de construction ferroviaire ou le wagon de mesure (1) comprend un capteur de déplacement (12) pour la mesure d'une distance parcourue sur la voie ferrée (5).

15. Système de mesure selon une des revendications 11 à 14, **caractérisé en ce que** le point fixe (15) présente des éléments redondants.
